(19) Europäisches Patentamt

European Patent Office

Office européen des brevets

(11) **EP 1 420 319 B1**

(12) **FASCICULE DE BREVET EUROPEEN**

(45) Date de publication et mention
de la délivrance du brevet:
**22.03.2006 Bulletin 2006/12**

(51) Int Cl.:
***G05D 1/08*** *(2006.01)*

(21) Numéro de dépôt: **03292648.7**

(22) Date de dépôt: **23.10.2003**

(54) **Procédé et dispositif pour la détection de couplages oscillatoires de pilotage dans un aéronef**

Verfahren und Vorrichtung zum Anzeigen von Steuerungsschwingungskupplungen in einem Flugzeug

Method and device for detecting piloting oscillatory couplings in an aircraft

(84) Etats contractants désignés:
**AT BE BG CH CY CZ DE DK EE ES FI FR GB GR
HU IE IT LI LU MC NL PT RO SE SI SK TR**

(30) Priorité: **18.11.2002 FR 0214381**

(43) Date de publication de la demande:
**19.05.2004 Bulletin 2004/21**

(73) Titulaire: **AIRBUS France
31060 Toulouse (FR)**

(72) Inventeurs:
 • **Raimbault, Nathalie
   31000 Toulouse (FR)**
 • **Fabre, Pierre
   31000 Toulouse (FR)**

(74) Mandataire: **Bonnetat, Christian
CABINET BONNETAT
29, rue de St. Pétersbourg
75008 Paris (FR)**

(56) Documents cités:
 **US-A- 4 298 833        US-A- 5 935 177**

## Description

La présente invention concerne un procédé et un dispositif pour la détection, dans un ordre de pilotage électrique d'aéronef, d'oscillations correspondant à des couplages oscillatoires de pilotage.

On sait que les organes de pilotage (manches, palonnier) des aéronefs modernes, notamment ceux appelés minimanches, sont aisés à manier par le pilote et/ou le copilote desdits aéronefs, leurs basculements pouvant être très rapides. En revanche, les actionneurs des surfaces aérodynamiques mobiles des aéronefs (ailerons, volets, gouvernes, etc ...), commandés à partir de ces organes de pilotage, ne peuvent répondre instantanément aux ordres de pilotage électriques engendrés par ces derniers. Il peut donc exister, aux grandes amplitudes de pilotage, un déphasage important entre le déplacement d'un organe de pilotage et celui des surfaces aérodynamiques mobiles qu'il commande.

Il en résulte que le pilote, constatant que la position des surfaces aérodynamiques mobiles commandées est en retard par rapport à la position choisie pour ledit organe de commande, peut avoir tendance à augmenter encore l'amplitude du basculement dudit organe de commande. Mais alors, l'amplitude du braquage des surfaces aérodynamiques peut dépasser celle correspondant à l'ordre de pilotage initial, de sorte que le pilote réduit le basculement dudit organe de commande, ce qui entraîne, avec retard, un retour des surfaces aérodynamiques, etc ... Il apparaît donc, dans l'aéronef, un couplage oscillatoire de pilotage --généralement désigné par couplage PIO (Pilot Induced Oscillations) en aéronautique-- qui peut dégrader la précision de pilotage.

Pour tenter de résoudre un tel problème, il est connu d'augmenter le dimensionnement des actionneurs des surfaces aérodynamiques commandées et de leurs alimentations hydrauliques et électriques, ce qui augmente les coûts et la masse de l'aéronef. De telles augmentations de coûts et de masse peuvent devenir insupportables pour des aéronefs de grandes dimensions.

Par ailleurs, le document US-A-4 298 833 prévoit de traiter l'ordre de pilotage, notamment par filtrage, pour le transformer en un ordre de commande exempt de couplage oscillatoire de pilotage. Cependant, ce traitement s'effectue sans réelle détection des oscillations de couplage et à l'insu du pilote, qui peut donc continuer à les engendrer.

On remarquera de plus que le document US-A-5 935 177 décrit un procédé pour la détection d'oscillations, correspondant à des couplages oscillatoires de pilotage, dans un ordre de pilotage électrique $\delta$ commandant un aéronef autour de l'un de ses axes de manoeuvre (roulis, tangage ou lacet), ledit ordre de pilotage électrique $\delta$ pouvant prendre une valeur maximale $\delta o$, procédé selon lequel :

- on échantillonne ledit ordre de pilotage électrique $\delta$ avec un pas d'échantillonnage $\Delta t$, pour obtenir une pluralité de N échantillons successifs $x_k$, avec k = 0, 1, 2, ..., N-1 ;
- on choisit le nombre d'échantillons N et le pas d'échantillonnage $\Delta t$, de façon que l'inverse de leur produit N.$\Delta t$ soit égal à 0,3 Hz ; et
- on décompose ledit ordre de pilotage échantillonné en série de Fourier.

Cependant, ce dernier procédé connu :

- ne fait pas intervenir que le seul ordre de pilotage, mais exige de plus des informations de lacet, de roulis et de tangage de l'avion ; et
- ne délivre qu'un signal tout ou rien et non pas un signal représentatif de l'amplitude des oscillations PIO.

La présente invention a pour objet de remédier à ces inconvénients. Elle concerne un procédé et un dispositif simples pour détecter un couplage oscillatoire de pilotage, afin de prévenir le pilote de son apparition et de son niveau et/ou d'agir pour en éviter les effets.

A cette fin, selon l'invention, le procédé du type rappelé ci-dessus est remarquable en ce que :

- à chaque échantillon $x_k$, on donne la forme :

$$ x_k = \sum_{r=0}^{N-1} \frac{1}{N} A_r \, e^{\frac{2\pi j k r}{N}} $$

expression dans laquelle j est le symbole dont est affectée la partie imaginaire d'un nombre complexe, r est le nombre de composantes harmoniques de la série de Fourier et $A_r$ les coefficients de Fourier, chacun de ces derniers étant égal à :

$$A_r = \sum_{k=0}^{N-1} x_k\, e^{\frac{-2\pi jkr}{N}} \quad ;$$

- on détermine les modules |A1| et |A2| des deux premiers coefficients de Fourier A1 et A2, correspondant respectivement à r = 1 et r = 2 ;
- on calcule un indice I, égal au quotient de la somme |A1|+ |A2| desdits modules par le nombre N d'échantillons ; et
- on compare ledit indice I à une fraction q.δo de ladite valeur maximale δo dudit ordre de pilotage électrique δ, ledit coefficient q de ladite fraction q.δo étant déterminé à partir d'une base de données préétablie, regroupant une pluralité de cas de pilotage réels antérieurs dans lesquels étaient apparus de tels couplages oscillatoires de pilotage, et on considère :

  • qu'il n'existe pas de couplage oscillatoire de pilotage si ledit indice I est inférieur à ladite fraction q.δo ; et
  • qu'il existe un couplage oscillatoire de pilotage si ledit indice I est égal ou supérieur à ladite fraction q.δo, la valeur, comprise entre 0 et 1, dudit indice I étant représentative de l'amplitude desdites oscillations correspondant audit couplage oscillatoire de pilotage.

Le procédé de la présente invention est basé sur deux constatations de la demanderesse lors de l'examen de cas de pilotage réels antérieurs dans lesquels des couplages oscillatoires de pilotage étaient apparus :

- d'une part, cet examen montre que les oscillations de couplage ont des fréquences comprises entre 0,3 Hz et 0,6 Hz, de sorte que la décomposition de l'ordre de pilotage en série de Fourier a pour objet de déterminer les composantes de cet ordre comprises entre 0,3 Hz et 0,6 Hz ;
- d'autre part, ledit examen montre que, lorsque lesdites oscillations de couplage apparaissent, leur énergie dépasse une certaine fraction, généralement égale à 15% de la valeur maximale δo de l'ordre de pilotage δ.

De préférence, ledit ordre de pilotage électrique δ est filtré avant échantillonnage, pour en éliminer les oscillations autres que celles correspondant à un couplage oscillatoire de pilotage.

Dans le cas où l'aéronef est prévu pour pouvoir être piloté par un pilote et un copilote, il est avantageux que ledit ordre de pilotage électrique δ soit la somme des ordres de pilotage électriques individuels correspondants, résultant respectivement de l'action du pilote et de l'action du copilote.

La présente invention concerne de plus un dispositif pour la mise en oeuvre du procédé mentionné ci-dessus. Un tel dispositif, permettant la détection d'oscillations, correspondant à un couplage oscillatoire de pilotage, dans un ordre de pilotage électrique δ commandant un aéronef autour de l'un de ses axes de manoeuvre comportant :

- des premiers moyens d'échantillonnage dudit ordre de pilotage électrique δ ;
- des deuxièmes moyens de décomposition en série de Fourier dudit ordre de pilotage δ échantillonné ;

est remarquable en ce qu'il comporte de plus :

- des troisièmes moyens de calcul dudit indice I ; et
- des quatrièmes moyens effectuant la comparaison entre ledit indice I et ladite fraction q.δo de ladite valeur maximale dudit ordre de pilotage électrique δ, ledit coefficient q de ladite fraction q.δo étant déterminé à partir d'une base de données préétablie, regroupant une pluralité de cas de pilotage réels antérieurs dans lesquels étaient apparus de tels couplages oscillatoires de pilotage.

De préférence, lesdits premiers, deuxièmes, troisièmes et quatrièmes moyens sont constitués par un même calculateur qui, avantageusement, peut faire partie des calculateurs de commandes de vol électriques dudit aéronef.

Les figures du dessin annexé feront bien comprendre comment l'invention peut être réalisée. Sur ces figures, des références identiques désignent des éléments semblables.

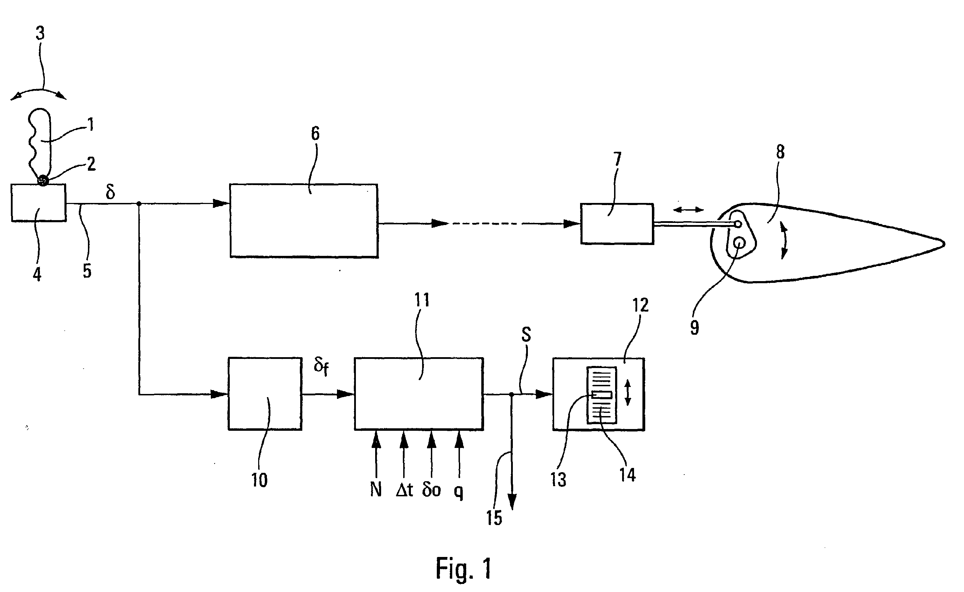

Les figures 1 à 3 montrent les schémas synoptiques de trois modes de mise en oeuvre schématiques de l'invention.

Le système de pilotage, représenté schématiquement sur la figure 1, comporte un organe de pilotage 1, par exemple du type manche, pouvant basculer autour d'une articulation 2 dans deux sens opposés (double flèche 3). L'organe de pilotage 1 est associé à un transducteur 4 délivrant, à sa sortie 5, un ordre de pilotage électrique δ représentatif de l'amplitude de basculement de l'organe de pilotage 1.

L'ordre de pilotage électrique δ est transmis à des calculateurs de commandes de vol électriques 6, qui engendrent un ordre de commande pour des actionneurs 7, aptes à braquer des surfaces aérodynamiques mobiles 8 d'un aéronef (non représenté) autour de leur axe de rotation 9. Si l'organe de pilotage 1 est un manche, par exemple un minimanche, les surfaces aérodynamiques mobiles 8 commandent ledit aéronef soit en roulis, soit en tangage.

Par ailleurs, l'ordre de pilotage δ, dans lequel on recherche des fréquences comprises entre 0,3 et 0,6 Hz, représentatives d'un éventuel couplage oscillatoire de pilotage par le pilote actionnant ledit organe de pilotage 1, est adressé à un système de filtrage 10 apte à éliminer de cet ordre de pilotage δ des oscillations qui ne correspondent pas aux oscillations dudit couplage. Ensuite, l'ordre δf filtré est adressé à un calculateur 11, apte à le décomposer en série de Fourier, afin d'y détecter d'éventuelles composantes de fréquences comprises entre 0,3 et 0,6 Hz.

Pour permettre une telle décomposition en série de Fourier, il est indispensable de stocker momentanément ledit ordre de pilotage δ. A cet effet, le calculateur 11 commence par échantillonner l'ordre de pilotage δ avec un pas d'échantillonnage Δt pour obtenir N échantillons successifs $x_k$, avec k=0, 1, 2, ..., N-1. Ainsi, l'ordre de pilotage continu δ est transformé en un signal discret $x_k$.

Le nombre N et le pas Δt sont choisis, entre autres considérations techniques, pour que l'inverse de leur produit soit au moins pratiquement égal à 0,3 Hz. Par exemple, en pratique, on peut prendre Δt=125 ms et N = 27. Ainsi, le produit N.Δt est égal à 3,375 s et son inverse 1/ N.Δt est égal à 0,296 Hz.

Le signal discret $x_k$ est ensuite décomposé en série de Fourier par le calculateur 11, de sorte que, quelle que soit la valeur de k entre 0 et N-1, on ait, de façon connue :

$$x_k = \sum_{r=0}^{N-1} \frac{1}{N} A_r\, e^{\frac{2\pi j k r}{N}} \quad \text{avec} \quad A_r = \sum_{k=0}^{N-1} x_k\, e^{\frac{-2\pi j k r}{N}}\,.$$

Dans ces expressions :

- j est le symbole (égal à $\sqrt{-1}$) dont est affectée la partie imaginaire d'un nombre complexe ;
- r est le nombre de composantes harmoniques de la série de Fourier ; et
- Ar les coefficients de Fourier de ladite décomposition.

Ainsi, les coefficients Ar constituent un signal périodique en fréquence, de période 1/ Δt, échantillonné à la fréquence Δf = 1/ N.Δt.

Une telle décomposition en série de Fourier fournit donc l'analyse fréquentielle du signal $x_k$ sur un horizon N.Δt, avec une résolution Δf=1/ N.Δt.

Par ailleurs, de façon connue, les modules |Ar| des coefficients de Fourier Ar, pour lesquels r est différent de 0, mesurent l'énergie du signal $x_k$ à la fréquence r.Δf.

Or, dans le cas présent, Δf est voisin de 0,3 Hz, de sorte que r.Δf est également voisin de 0,3 Hz pour r=1, correspondant au premier coefficient de Fourier A1, et voisin de 0,6 Hz pour r=2, correspondant au deuxième coefficient de Fourier A2.

La somme |A1| + |A2| des modules |A1| et |A2| desdits premier et deuxième coefficients de Fourier A1 et A2 représente donc l'énergie du signal $x_k$ pour des fréquences comprises entre 0,3 Hz et 0,6 Hz et correspondant aux oscillations de couplage oscillatoire de pilotage.

Le calculateur 11 calcule donc ladite somme des modules |A1| + |A2|, qui est homogène à l'amplitude de l'ordre de pilotage δ au facteur N près.

En conséquence, pour déterminer l'éventuelle présence d'un couplage oscillatoire dans l'ordre de pilotage δ, on peut comparer l'énergie du signal sinusoïdal recherché, c'est-à-dire la somme |A1| + |A2|, à la valeur maximale δo dudit ordre de pilotage δ.

Pour ce faire, le calculateur 11 calcule un indice I égal au quotient (|A1|+ |A2|)/N et compare cet indice à une fraction prédéterminée q.δo de cette valeur maximale δo.

Le coefficient q de cette fraction q.δo est par exemple déterminé à partir d'une base de données regroupant une pluralité de cas de pilotage antérieurs connus, dans lesquels sont apparus des couplages oscillatoires de pilotage à bord d'aéronefs. Ce coefficient est généralement voisin de 0,15.

Ainsi, le calculateur 11 est apte à engendrer un signal S qui est :

- égal à 0, lorsque ledit indice I est inférieur à q.δo, puisqu'alors il n'existe pas de couplage oscillatoire de pilotage ; et
- égal à (|A1| + |A2|)/N, compris entre 0 et 1, lorsque ledit indice I est égal ou supérieur à q.δo et qu'alors il existe un couplage oscillatoire de pilotage.

Comme mentionné ci-dessus, l'indice I est homogène à l'amplitude de l'ordre de pilotage $\delta$, dans la gamme de fréquences 0,3 Hz - 0,6 Hz. Cette amplitude a pour valeur maximale $\delta o$ quand l'ordre de pilotage ne comporte que des fréquences comprises dans ladite gamme. Ainsi, selon l'invention, on juge que le couplage oscillatoire de pilotage doit être détecté, si l'amplitude de l'ordre de pilotage $\delta$, dans ladite gamme de fréquences 0,3 Hz - 0,6 Hz, dépasse q% de l'amplitude maximale $\delta o$.

Le signal S peut être transmis à un dispositif d'affichage 12, par exemple pourvu d'un index 13 associé à une échelle 14, la position relative dudit index par rapport à ladite échelle étant représentative de l'amplitude dudit signal S et donc de l'éventuelle existence et de l'amplitude desdites oscillations correspondant à un couplage oscillatoire de pilotage.

Par ailleurs, ledit signal S est disponible sur une ligne 15, pour toute utilisation utile.

Pour décomposer le signal discret $x_k$ en série de Fourier, le calculateur 11 peut mettre en oeuvre les algorithmes connus sous le nom de "Fast Fourier Transform" ou toute autre méthode connue, telle que par exemple une méthode par récurrence.

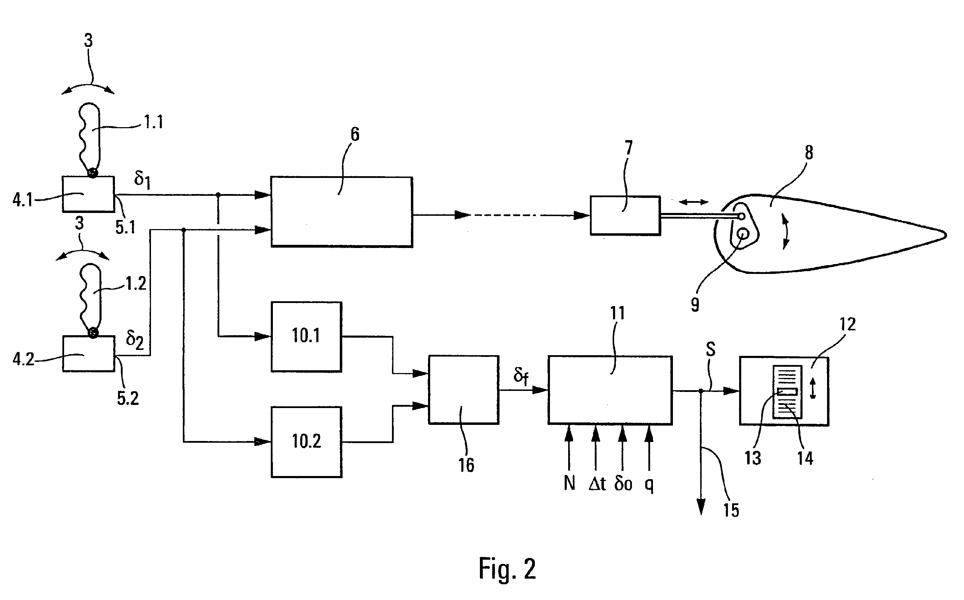

Sur la figure 2, on a illustré schématiquement le cas où le système de pilotage comportent deux organes de pilotage 1.1 et 1.2 en parallèle, respectivement semblables à l'organe de pilotage 1 et destinés à un pilote et à un copilote. Dans ce cas, les transducteurs respectifs 4.1 et 4.2 (semblables au transducteur 4) sont aptes à délivrer, à leur sortie 5.1 ou 5.2, des ordres de pilotage individuels $\delta 1$ et $\delta 2$ provenant respectivement de l'action du pilote et de celle du copilote. Ces ordres de pilotage individuels $\delta 1$ et $\delta 2$ sont adressés aux calculateurs de commandes de vol électrique 6, qui les traitent pour la commande des surfaces aérodynamiques mobiles 8.

Par ailleurs, conformément à la présente invention, les ordres de pilotage individuels $\delta 1$ et $\delta 2$ sont adressés à des filtres 10.1 et 10.2 (semblables au filtre 10) et additionnés dans un additionneur 16, avant d'être transmis au calculateur 11. Dans ce cas, l'ordre de pilotage filtré $\delta f$ adressé au calculateur 11 pour un traitement semblable à celui décrit ci-dessus est donc la somme filtrée des deux ordres de pilotage individuels $\delta 1$ et $\delta 2$.

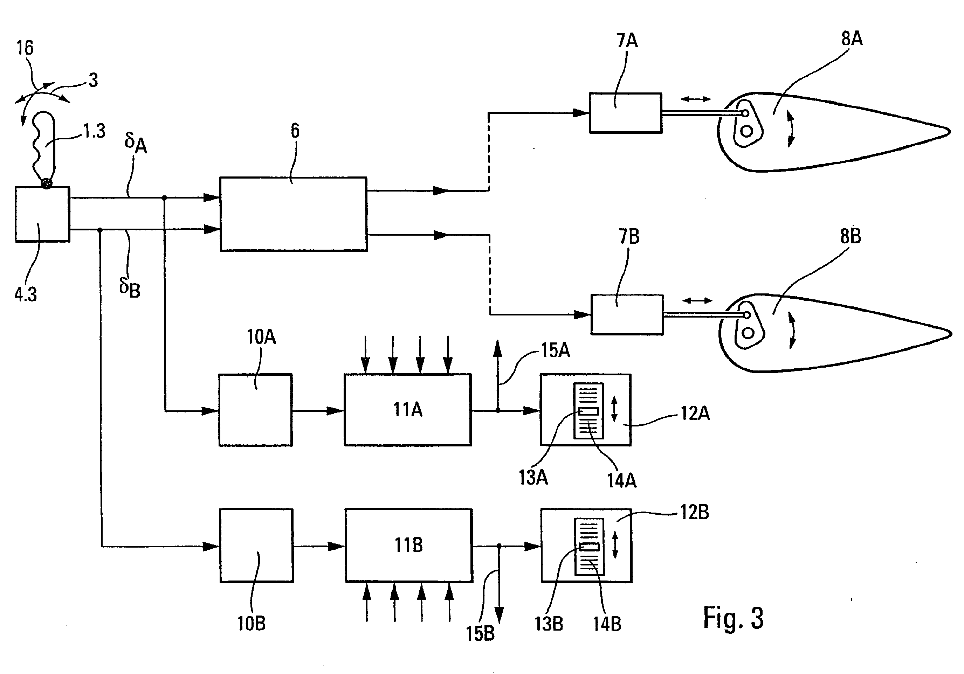

Dans le système de pilotage, représenté schématiquement sur la figure 3, l'organe de pilotage 1.3 bascule non seulement dans les deux sens opposés de la flèche 3, mais encore dans deux sens opposés (voir la double flèche 17) de direction orthogonale aux précédents, de sorte que le transducteur 4.3 associé peut délivrer deux ordres de pilotage électrique $\delta A$ et $\delta B$. L'un de ceux-ci peut, par exemple, être destiné au pilotage en roulis et l'autre au pilotage en tangage. Les calculateurs de commandes de vol électriques 6, qui reçoivent les ordres de pilotage $\delta A$ et $\delta B$, engendrent des ordres de commande respectifs pour des actionneurs 7A et 7B, chargés d'actionner des surfaces aérodynamiques mobiles 8A et 8B, qui elles-mêmes permettent le pilotage de l'aéronef autour de l'axe de manoeuvre correspondant (axe de roulis et axe de tangage, par exemple).

Par ailleurs, conformément à la présente invention, chaque ordre de pilotage $\delta A$ et $\delta B$ est traité de façon analogue au signal $\delta$ du système de la figure 1, c'est-à-dire qu'il est filtré par un filtre 10A ou 10B (semblable au filtre 10), puis traité par un calculateur 11A ou 11B (semblable au calculateur 11), le résultat dudit traitement étant affiché sur un dispositif d'affichage 12A ou 12B (semblable au dispositif d'affichage 12) comportant un index 13A ou 13B et une échelle 14A ou 14B et/ou disponible sur des lignes 15A ou 15B (semblables à ladite ligne 15).

On comprendra aisément qu'il peut être avantageux que les calculateurs 11, 11A et 11B fassent partie des calculateurs de commandes de vol électriques 6, bien que, sur les dessins, ils soient représentés distincts de ces derniers.

Par ailleurs, par association des figures 2 et 3, on peut aisément construire un mode de réalisation pourvu de deux organes de pilotage, dont chacun d'eux est apte à piloter l'aéronef autour de deux axes de manoeuvre.

**Revendications**

1. Procédé pour la détection d'oscillations, correspondant à un couplage oscillatoire de pilotage, dans un ordre de pilotage électrique $\delta$ commandant un aéronef autour de l'un de ses axes de manoeuvre, ledit ordre de pilotage électrique $\delta$ pouvant prendre une valeur maximale $\delta o$, procédé selon lequel :

   - on échantillonne ledit ordre de pilotage électrique $\delta$ avec un pas d'échantillonnage $\Delta t$, pour obtenir une pluralité de N échantillons successifs $x_k$, avec k = 0, 1, 2, ..., N-1 ;
   - on choisit le nombre d'échantillons N et le pas d'échantillonnage $\Delta t$, de façon que l'inverse de leur produit N.$\Delta t$ soit égal à 0,3 Hz ; et
   - on décompose ledit ordre de pilotage échantillonné en série de Fourier,

   **caractérisé en ce que** :

- à chaque échantillon $x_k$, on donne la forme :

$$x_k = \sum_{r=0}^{N-1} \frac{1}{N} A_r\, e^{\frac{2\pi jkr}{N}}$$

expression dans laquelle j est le symbole dont est affectée la partie imaginaire d'un nombre complexe, r est le nombre de composantes harmoniques de la série de Fourier et $A_r$ les coefficients de Fourier, chacun de ces derniers étant égal à :

$$A_r = \sum_{k=0}^{N-1} x_k\, e^{\frac{-2\pi jkr}{N}} \quad ;$$

- on détermine les modules |A1| et |A2| des deux premiers coefficients de Fourier A1 et A2, correspondant respectivement à r = 1 et r = 2 ;
- on calcule un indice I, égal au quotient de la somme |A1|+ |A2| desdits modules par le nombre N d'échantillons ; et
- on compare ledit indice I à une fraction q.δo de ladite valeur maximale δo du signal de commande électrique δ, ledit coefficient q de ladite fraction q.δo étant déterminé à partir d'une base de données préétablie, regroupant une pluralité de cas de pilotage antérieurs dans lesquels étaient apparus de tels couplages oscillatoires de pilotage, et on considère :

    • qu'il n'existe pas de couplage oscillatoire de pilotage si ledit indice I est inférieur à ladite fraction q.δo ; et
    • qu'il existe un couplage oscillatoire de pilotage si ledit indice I est égal ou supérieur à ladite fraction de q.δo, la valeur, comprise entre 0 et 1, dudit indice I étant représentative de l'amplitude desdites oscillations correspondant audit couplage oscillatoire de pilotage.

2. Procédé selon la revendication 1,
**caractérisé en ce que** ledit coefficient q de la fraction q.δo est égal à 0,15.

3. Procédé selon l'une des revendications 1 ou 2,
**caractérisé en ce que** ledit ordre de pilotage électrique δ est filtré avant échantillonnage, pour en éliminer les oscillations autres que celles correspondant à un couplage oscillatoire de pilotage.

4. Procédé selon l'une des revendications 1 à 3, pour un aéronef apte à être piloté par un pilote et/ou un copilote,
**caractérisé en ce que** ledit ordre de pilotage électrique δ est la somme des ordres de pilotage électriques individuels correspondants δ1 et δ2, résultant respectivement de l'action du pilote et de l'action du copilote.

5. Dispositif pour la mise en oeuvre du procédé selon l'une des revendications 1 à 4, permettant la détection d'oscillations, correspondant à un couplage oscillatoire de pilotage, dans un ordre de pilotage électrique δ commandant un aéronef autour de l'un de ses axes de manoeuvre, ledit dispositif comportant :

    - des premiers moyens d'échantillonnage dudit ordre de pilotage électrique δ ; et
    - des deuxièmes moyens de décomposition en série de Fourier dudit ordre de pilotage δ échantillonné ;

**caractérisé en ce qu'**il comporte de plus :

    - des troisièmes moyens de calcul dudit indice I ; et
    - des quatrièmes moyens effectuant la comparaison entre ledit indice I et ladite fraction q.δo de ladite valeur maximale dudit ordre de pilotage électrique δ, ledit coefficient q de ladite fraction q.δo étant déterminé à partir d'une base de données préétablie, regroupant une pluralité de cas de pilotage antérieurs dans lesquels étaient apparus de tels couplages oscillatoires de pilotage.

6. Dispositif selon la revendication 5,

**caractérisé en ce que** lesdits premiers, deuxièmes, troisièmes et quatrièmes moyens sont constitués par un même calculateur (11).

**7.** Dispositif selon la revendication 6,
**caractérisé en ce que** ledit calculateur (11) fait partie des calculateurs de commandes de vol électriques (6) équipant ledit aéronef.

**Claims**

**1.** Method for detecting oscillations, corresponding to pilot induced oscillations, in an electric command $\delta$ controlling an aircraft about one of its axes of manoeuvre, said electric command $\delta$ being able to adopt a maximum value $\delta o$, in which method:

- said electric command $\delta$ is sampled at a sampling interval $\Delta t$ to obtain a plurality of N successive samples $x_k$ with k = 0, 1, 2, ..., N-1;
- the number of samples N and the sampling interval $\Delta t$ are chosen so that the inverse of their product $N.\Delta t$ is equal to 0.3 Hz; and
- said sampled command is broken down into a Fourier series,

**characterized in that**:

- each sample $x_k$ is given the form:

$$x_k = \sum_{r=0}^{N-1} \frac{1}{N} A_r e^{\frac{2\pi jkr}{N}}$$

in which expression j is the symbol assigned to the imaginary part of a complex number, r is the number of harmonic components in the Fourier series and $A_r$ are the Fourier coefficients, each of the latter being equal to:

$$A_r = \sum_{k=0}^{N-1} x_k e^{\frac{-2\pi jkr}{N}} ;$$

- the moduli |A1| and |A2| of the first two Fourier coefficients A1 and A2, respectively corresponding to r = 1 and r = 2, are determined;
- an index I is calculated that is equal to the quotient of the sum |A1| + |A2| of said moduli by the number N of samples; and
- said index I is compared with a fraction $q.\delta o$ of said maximum value $\delta o$ of the electric control signal $\delta$, said coefficient q of said fraction $q.\delta o$ being determined from a pre-established database grouping together a number of earlier flight scenarios in which such pilot induced oscillations occurred, and it is reckoned:

  • that there are no pilot induced oscillations if said index I is lower than said fraction $q.\delta o$; and
  • that there are pilot induced oscillations if said index I is equal to or greater than said fraction $q.\delta o$, the value, lying between 0 and 1, of said index I being representative of the amplitude of said oscillations corresponding to said pilot induced oscillations.

**2.** Method according to Claim 1,
**characterized in that** said coefficient q of the fraction $q.\delta o$ is equal to 0.15.

**3.** Method according to either of Claims 1 and 2,
**characterized in that** said electric command $\delta$ is filtered prior to sampling, in order to eliminate from it any oscillations other than those corresponding to pilot induced oscillations.

4. Method according to one of Claims 1 to 3 for an aircraft that can be flown by a pilot and/or a copilot, **characterized in that** said electric command $\delta$ is the sum of the corresponding individual electric commands $\delta1$ and $\delta2$ resulting respectively from the action of the pilot and from the action of the copilot.

5. Device for implementing the method according to one of Claims 1 to 4, allowing the detection of oscillations corresponding to pilot induced oscillations, in an electric command $\delta$ controlling an aircraft about one of its axes of manoeuvre, said device comprising:

- first means for sampling said electric command $\delta$; and
- second means for breaking said sampled command $\delta$ down into a Fourier series;

**characterized in that** it further comprises:

- third means for calculating said index I; and
- fourth means making the comparison between said index I and said fraction q.$\delta$o of said maximum value of said electric command $\delta$, said coefficient q of said fraction q.$\delta$o being determined from a pre-established database grouping together a number of earlier flight scenarios in which such pilot induced oscillations occurred.

6. Device according to Claim 5,
**characterized in that** said first, second, third and fourth means consist of one and the same computer (11).

7. Device according to Claim 6,
**characterized in that** said computer (11) forms part of the fly-by-wire computers (6) with which said aircraft is equipped.


**Patentansprüche**

1. Verfahren zur Erfassung von Schwingungen, die durch Lenksteuerung bewirkten Schwingungskopplungen entsprechen, in einem elektrischen Lenksteuerbefehl $\delta$, der ein Flugzeug um eine seiner Manövrierachsen steuert, wobei der elektrischen Lenksteuerbefehl $\delta$ einen maximalen Wert $\delta$o annehmen kann, wobei gemäß dem Verfahren:

- der elektrische Lenksteuerbefehl $\delta$ mit einem Abtastschritt $\Delta$t abgetastet wird, um eine Mehrzahl von N aufeinander folgende Abtastwerte $x_k$, mit k = 0, 1, 2, ..., N-1, zu erhalten;
- die Anzahl von Abtastwerten N und der Abtastschritt $\Delta$t in der Weise gewählt wird, dass der Kehrwert ihres Produkt N • $\Delta$t gleich 0,3 Hz beträgt; und
- der abgetastete Lenksteuerbefehl in eine Fouriersche Reihe zerlegt wird,

**dadurch gekennzeichnet, dass**:

- auf jeden Abtastwert $x_k$ die Formel angewendet wird:

$$x_k = \sum_{r=0}^{N-1} \frac{1}{N} A_r e^{\frac{2\pi jkr}{N}}$$

wobei der Ausdruck j in dieser das Symbol ist, von dem der imaginäre Teil einer komplexen Zahl beeinflusst wird, r die Zahl der harmonischen Bestandteile der Fourierschen Reihe ist und $A_r$ die Fourier-Koeffizienten sind, wobei jeder von diesen gleich ist mit:

$$A_r = \sum_{k=0}^{N-1} x_k e^{\frac{-2\pi jkr}{N}}$$

- die Module |A1| und |A2| von den zwei ersten Fourier-Koeffizienten A1 und A2 bestimmt werden, die jeweils mit r = 1 und r = 2 korrespondieren;
- ein Index I berechnet wird, der gleich dem Quotienten der Summe |A1|+|A2| der Module geteilt durch die Anzahl N Abtastwert ist; und
- der Index I mit einer Fraktion q • δo des Maximalwertes δo des elektrischen Lenksteuerbefehls δ verglichen wird, wobei der Koeffizient q der Fraktion q • δo ausgehend von einer voreingerichteten Datenbank bestimmt wird, in der eine Mehrzahl von früheren Fällen realer Lenksteuerungen aufgenommen ist, in welchen solche durch Lenksteuerung verursachte Schwingungskopplungen aufgetreten sind, und angenommen wird:

• dass keine durch Lenksteuerung verursachte Schwingungskopplung existiert, wenn der Index I kleiner als die Fraktion q • δo liegt; und
• dass eine durch Lenksteuerung verursachte Schwingungskopplung existiert, wenn der Index I gleich oder größer der Fraktion q • δo ist, wobei der Wert des Index I, der zwischen 0 und 1 liegt, repräsentativ für die Amplitude der Schwingungen ist, die der durch Lenksteuerung verursachten Schwingungskopplung entspricht.

2. Verfahren nach Anspruch 1,
**dadurch gekennzeichnet, dass** der Koeffizient q der Fraktion q • δo gleich 0,15 beträgt.

3. Verfahren nach einem der Ansprüche 1 oder 2, **dadurch gekennzeichnet, dass** der elektrische Lenksteuerbefehl δ vor einer Abtastung gefiltert wird, um andere Schwingungen als diejenigen, die einer durch Lenkung verursachten Schwingungskopplung entsprechen, zu beseitigen.

4. Verfahren nach einem der Ansprüche 1 bis 3, für ein Flugzeug, das zur Steuerung durch einen Piloten und/oder einen Copiloten ausgelegt ist, **dadurch gekennzeichnet, dass** der elektrische Lenksteuerbefehl δ die Summe der entsprechenden persönlichen elektrischen Lenksteuerbefehle δ1 und δ2 ist, die sich jeweils aus der Aktion des Piloten und der Aktion des Copiloten ergeben.

5. Vorrichtung zur Durchführung des Verfahrens nach einem der Ansprüche 1 bis 4, welche die Erfassung von Schwingungen, die einer durch Lenksteuerung verursachten Schwingungskopplung entsprechen, in einem elektrischen Lenksteuerbefehl δ ermöglicht, der ein Flugzeug um eine seiner Manövrierachsen steuert, wobei die Vorrichtung umfasst:

- erste Mittel zur Abtastung des elektrischen Lenksteuerbefehls δ;
- zweite Mittel zur Zerlegung des abgetasteten Lenksteuerbefehls δ in eine Fouriersche Reihe;

**dadurch gekennzeichnet, dass** diese ferner umfasst:

- dritte Mittel zur Berechnung des Index I; und
- vierte Mittel, welche den Vergleich zwischen dem Index I und der Fraktion q • δo des Maximalwertes des elektrischen Lenksteuerbefehls δ durchführen, wobei der Koeffizient q der Fraktion q • δo ausgehend von einer voreingerichteten Datenbank bestimmt wird, welche eine Mehrzahl von Fällen früherer Lenkvorgänge enthält, in welchen solche durch Lenksteuerung verursachten Schwingungskopplungen aufgetreten waren.

6. Vorrichtung nach Anspruch 5, **dadurch gekennzeichnet, dass** das erste, zweite, dritte und vierte Mittel durch ein und denselben Rechner (11) gebildet ist.

7. Vorrichtung nach Anspruch 6, **dadurch gekennzeichnet, dass** der Rechner (11) Teil der Rechner zur elektrischen Flugsteuerung (6) ist, mit denen das Flugzeug ausgestattet ist.

Fig. 1

Fig. 2

Fig. 3

EP 1 420 319 B1